# EUROPÄISCHE PATENTSCHRIFT

(11) **EP 0 482 323 B1**
(45) Veröffentlichungstag und Bekanntmachung des Hinweises auf die Patenterteilung: **01.12.1993**
(21) Anmeldenummer: 91114896.3
(22) Anmeldetag: 04.09.1991
(51) Int. Cl.: B60G 11/26

(54) **Federndes Abstützsystem, insbesondere für Kraftfahrzeuge**
Spring suspension system, particularly for motor vehicles
Système de support à ressorts, notamment pour véhicules

(30) Priorität: 24.10.1990 DE 4033781
(43) Veröffentlichungstag der Anmeldung: 29.04.1992
(73) Patentinhaber: MERCEDES-BENZ AG, 70327 Stuttgart (DE)
(72) Erfinder: Schützner, Paul, Dr. rer. nat., W-7300 Esslingen (DE)

(56) Entgegenhaltungen:
- EP-B- 0 166 702
- DE-A- 2 200 356
- DE-A- 3 233 160
- DE-A- 3 504 217
- DE-A- 3 831 338
- DE-B- 1 021 732
- US-A- 4 678 203

## Beschreibung

Die Erfindung betrifft ein federndes Abstützsystem, insbesondere für Kraftfahrzeuge, gemäß den Oberbegriff des Anspruch 1, mit zwischen einer gefederten Masse, z.B. Fahrzeugaufbau, und einer ungefederten Masse, z.B. Rad oder Achse, angeordneten pneumatischen bzw. hydropneumatischen Federelementen, welche nach Art von Verdrängeraggregaten aufgebaut sind und eine erste Pneumatikkammer, deren Volumen sich entsprechend dem jeweiligen Federhub ändert, sowie eine zweite Pneumatikkammer besitzen, welche ein konstantes Volumen aufweist und mittels einer in Abhängigkeit von der Hubstellung des jeweiligen Federelementes steuerbaren Ventilanordnung mit der ersten Kammer verbindbar bzw. von der ersten Kammer abtrennbar ist.

Ein entsprechendes Abstützsystem für Kraftfahrzeuge ist aus der DE-B 10 21 732 bekannt. Dabei ist ein zwischen Fahrzeugaufbau und einer Achse angeordneter Pneumatikbalg ständig mit einer am Fahrzeugaufbau angeordneten ersten Pneumatikkammer verbunden, die ihrerseits über eine durch ein Drehschieberventil steuerbare Leitung mit einer zweiten aufbauseitig angeordneten Pneumatikkammer gekoppelt ist. Das Drehschieberventil wird mittels eines Gestänges gesteuert, welches zwischen einem das Ventil betätigenden Hebel und der zugehörigen Fahrzeugachse angeordnet ist. Sobald die Achse relativ zum Fahrzeugaufbau eine vergleichsweise stark eingefederte oder stark ausgefederte Lage erreicht, wird das Drehschieberventil durch das Gestänge vollständig geschlossen, mit der Folge, daß die zweite Pneumatikkammer von der ersten Pneumatikkammer abgetrennt wird und nur noch ein entsprechend vermindertes Pneumatikvolumen zwischen Fahrzeugaufbau und Radachse wirksam wird. Auf diese Weise wird ein ausgeprägt progressives Federungsverhalten erreicht.

Ein funktional ähnliches Abstützsystem geht aus der DE-A 22 00 356 hervor. Hier kann ein Pneumatikbalg, welcher zwischen einer Radachse und dem Fahrzeugaufbau angeordnet ist, von einer aufbauseitig angeordneten Pneumatikkammer abgetrennt werden, sobald die Radachse eine Mittellage relativ zum Fahrzeugaufbau in Einfederungs- oder Ausfederungsrichtung hinreichend weit verläßt. Dabei betätigt die sich relativ zum Fahrzeugaufbau bewegende Achse zusätzlich ein Pneumatikventil, derart, daß bei extremer Annäherung der Radachse an den Fahrzeugaufbau die aufbauseitige Pneumatikkammer von einer pneumatischen Druckquelle mit zusätzlichem Pneumatikmedium beaufschlagt bzw. aus dem Pneumatikbalg Pneumatikmedium abgelassen wird, sobald die Radachse relativ zum Fahrzeugaufbau vergleichsweise weit in Ausfederrichtung bewegt wird. Die auf diese Weise erzielbare Druckerhöhung in der Pneumatikkammer bei extremer Einfederbewegung der Radachse bzw. die bei extremer Ausfederbewegung erfolgende Druckabsenkung im Pneumatikbalg können dazu führen, daß die bei diesen Betriebszuständen geschlossene Ventilanordnung zwischen Pneumatikbalg und Pneumatikkammer aufgrund der Druckdifferenz zwischen Pneumatikkammer und Pneumatikbalg öffnet; hierzu sind die Schließorgane der Ventilanordnung nach Art von Rückschlagventilen angeordnet.

Mit der aus der DE-A 22 00 356 bekannten Anordnung kann ein noch stärker progressives Federungsverhalten erreicht werden.

Aus der EP-A 01 66 702 ist ein weiteres Abstützsystem bekannt, bei dem die Federelemente als reine Pneumatikaggregate mit jeweils zwei Kammern ausgebildet sind, von denen eine ihr Volumen entsprechend dem jeweiligen Federhub ändert, während das Volumen der anderen Kammer konstant bleibt. Auch hier ist zwischen den Kammern eine Ventilanordnung angeordnet, so daß das Abstützsystem bei offener Ventilanordnung mit vergleichsweise geringer Federrate arbeitet, d.h. in der Druckstufe des Federelementes (das Gesamtvolumen der beiden Kammern vermindert sich aufgrund des Federhubes) wächst die Abstützkraft nur vergleichsweise langsam an, während in der Zugstufe (das Gesamtvolumen der beiden Kammern vergrößert sich aufgrund des Federhubes) die Abstützkraft nur vergleichsweise langsam absinkt. Dies beruht darauf, daß das Verhältnis zwischen der bei einem Federhub auftretenden Volumensänderung der beiden Kammern und dem Gesamtvolumen der beiden Kammern vergleichsweise geringe Werte hat. Wenn dagegen die Ventilanordnung geschlossen wird, ergibt sich eine vergleichsweise hohe Federrate, d.h. die Abstützkräfte steigen in der Druckstufe relativ stark an, während sie in der Zugstufe entsprechend stark absinken. Dies beruht darauf, daß beim Schließen der Verbindung zwischen den beiden Kammern nur das Pneumatikmedium der einen Kammer das Federverhalten bestimmt und das Verhältnis zwischen Volumensänderung bei einem Federhub und dem Volumen dieser Kammer vergleichsweise große Werte annimmt.

Durch Umschalten der Ventilanordnung kann also zwischen harter und weicher Federung umgestellt werden. Diese Umstellung erfolgt gemäß der EP-A 01 66 702 parametergesteuert, insbesondere in Abhängigkeit von der Querbeschleunigung eines Fahrzeuges, zu dessen federnder Abstützung das in der EP-A 01 66 702 beschriebene System vor allem vorgesehen ist.

Gegebenenfalls kann gemäß der EP-A 01 66 702 auch vorgesehen sein, daß die beiden Kammern des Pneumatikaggregates im Schließzustand der Ventilanordnung noch über Drosselstrecken bzw. -ventile verbunden bleiben und zwischen den Kammern ein Austausch von Pneumatikmedium stattfindet, sobald ein hinreichender Druckunterschied wirksam wird. Auf diese Weise kann einerseits eine wirksame Dämpfung der Federhübe erreicht werden; andererseits ändert sich die Federrate des Pneumatikaggregates beim Öffnen bzw. Schließen der Ventilanordnung zwischen den beiden Kammern weniger ausgeprägt.

Ein ähnliches federndes Abstützsystem für Kraftfahrzeuge ist aus der DE-OS 32 33 160 bekannt. Auch hier sind wiederum als Federelemente zwischen den Fahrzeugrädern und dem Fahrzeugaufbau Pneumatikaggregate mit jeweils zwei Kammern vorgesehen, von denen eine ihr Volumen entsprechend dem Federhub ändert, während das Volumen der anderen Kammer konstant bleibt.

Die zwischen den beiden Kammern vorhandene Ventilanordnung, welche normalerweise ihre Offenstellung einnimmt, wird achsweise gesteuert, und zwar derart, daß jeweils eine Umschaltung in die Schließstellung erfolgt, wenn größere Druckdifferenzen zwischen den Pneumatikdrücken der einer Fahrzeugachse zugeordneten Pneumatikaggregate auftreten. Auf diese Weise kann eine ähnliche Wirkung wie mit herkömmlichen Querstabilisatoren bei Fahrzeugen erreicht werden, d.h. Wank- bzw. Rollbewegungen des Fahrzeugaufbaus wird mit stärkerer Federrate entgegengewirkt.

Im übrigen ist es für pneumatische Federaggregate beispielsweise aus der DE-OS 35 04 217 ganz allgemein bekannt, der sich bei Federhüben volumenmäßig verändernden Kammer eine Kammer mit konstantem Volumen zuzuordnen und zwischen diese beiden Kammern ein willkürlich betätigbares Umschaltventil anzuordnen, um eine Umschaltung zwischen zwei unterschiedlichen Federraten vornehmen zu können.

Aufgabe der Erfindung ist es nun, ein Abstützsystem der eingangs angegebenen Art dahingehend zu verbessern, daß unerwünschten Resonanzschwingungen, bei Kraftfahrzeugen insbesondere Schwingungen des Fahrzeugaufbaus mit der sogenannten Aufbauresonanzfrequenz, verstärkt entgegengewirkt wird.

Diese Aufgabe wird erfindungsgemäß bei einem System der eingangs angegebenen Art dadurch gelöst, daß die Ventilanordnung mittels einer rechnergestützten Steuerung, die aus den Signalen eines zwischen gefederter und ungefederter Masse angeordneten Hubgebers neben der jeweiligen Hubstellung auch die Hubgeschwindigkeit bzw. -richtung ermittelt, jeweils bei Hubrichtungsumkehr zwischen Offen- und Schließlage umstellbar ist.

Für die Erfindung ist also charakteristisch, daß die Abstützkräfte eines Federelementes bei Umkehr der Bewegungsrichtung sehr stark verändert werden können, indem die Ventilanordnung bei Hubrichtungsumkehr umstellbar ist. Dies hat zur Folge, daß den jeweiligen Schwingungen besonders ausgeprägt entgegengewirkt wird, weil die Änderung der Abstützkräfte gegenphasig zu den Schwingungsbewegungen erfolgt.

Wenn beispielsweise die Ventilanordnung in der Druckstufe des pneumatischen Federelementes vor Erreichen des Umkehrpunktes der Bewegungsrichtung geschlossen und bei Umkehr der Bewegungsrichtung, d.h. bei Beginn der Zugstufe, wieder geöffnet wird, so steigen die Abstützkräfte vor Erreichen des Umkehrpunktes stark an, während nachfolgend bei Umschaltung der Ventilanordnung eine ausgeprägte Verminderung der Abstützkraft erfolgt. Dies beruht darauf, daß der Pneumatikdruck in der volumenveränderlichen Kammer des Federelementes in der Druckstufe bei geschlossener Ventilanordnung stark ansteigt, wobei gleichzeitig eine hohe Druckdifferenz zwischen den beiden Kammern auftritt. Wenn nun die Ventilanordnung zu Beginn der nachfolgenden Zugstufe geöffnet wird, so strömt Pneumatikmedium von der unter hohem Druck stehenden volumenveränderlichen Kammer in die andere unter vergleichsweise geringem Druck stehende Kammer mit konstantem Volumen über, d.h. noch in der Umkehrphase zwischen den entgegengesetzten Bewegungsrichtungen erfolgt eine ausgeprägte Absenkung der Abstützkräfte.

Ähnliches gilt, jedoch mit umgekehrten Vorzeichen, wenn die Ventilanordnung in der Zugstufe des pneumatischen Federelementes vor Erreichen des Umkehrpunktes zwischen Zug- und Druckstufe geschlossen und nach Umkehr der Bewegungsrichtung, d.h. bei beginnender Druckstufe geöffnet wird. Hier sinkt der Pneumatikdruck in der volumenveränderlichen Kammer während der Endphase der Zugstufe aufgrund der geschlossenen Ventilanordnung stark ab, wobei gegenüber dem Druck in der Kammer mit konstantem Volumen ein erheblicher Unterdruck auftreten kann. Wenn nun die Ventilanordnung bei Umkehr der Bewegungsrichtung geöffnet wird, strömt Pneumatikmedium aus der Kammer mit konstantem Volumen in die unter vergleichsweisem Unterdruck stehende volumenveränderliche Kammer, d.h. die in der Endphase der Zugstufe stark verminderten Abstützkräfte werden noch in der Umkehrphase zwischen den Bewegungsrichtungen deutlich erhöht.

Auf diese Weise kann einer Bewegung des Aufbaus relativ zur Fahrbahn besonders wirksam entgegengewirkt werden; insbesondere lassen sich Schwingungen des Aufbaus mit der sogenannten Aufbauresonanzfrequenz besonders wirksam aussteuern und dämpfen.

Die aufgrund von Fahrbahnunebenheiten praktisch dauernd auftretenden, relativ hochfrequenten Federbewegungen der Räder lassen sich gegebenenfalls dazu ausnutzen, die Höhenlage des Fahrzeugaufbaus relativ zur Fahrbahn zu verändern.

Wenn beispielsweise der Bodenabstand des Fahrzeugaufbaus an einem Rad erhöht werden soll, wird die Verbindung zwischen der volumenveränderlichen Kammer und der Kammer mit konstantem Volumen des zugeordneten Federaggregates geschlossen gehalten und jeweils nur dann geöffnet, wenn in der volumenveränderlichen Kammer bei einer Abwärtsbewegung des jeweiligen Rades relativ zum Aufbau ein Unterdruck relativ zum Druck der Kammer mit konstantem Volumen auftritt. Beim nachfolgenden Aufwärtshub des Rades bzw. beim Durchlauf des Umkehrpunktes der Radbewegung vor dem nachfolgenden Aufwärtshub wird dann die Verbindung wieder geschlossen. Auf diese Weise kann die volumenveränderliche Kammer mit Pneumatikmedium vollgepumpt werden, bis der Druck in der Kammer mit konstantem Volumen so weit abgesunken ist, daß der Wert des Druckes in dieser Kammer von dem sich aufgrund der Federbewegungen verändernden Druck in der volumenveränderlichen Kammer in der Zugstufe der Federbewegungen nicht mehr unterschritten wird.

In analoger Weise besteht die Möglichkeit, den Bodenabstand des Fahrzeugaufbaus zu verringern.

In diesem Falle wird die Verbindung zwischen der Kammer mit konstantem Volumen und der volumenveränderlichen Kammer beim Aufwärtshub des Rades relativ zum Fahrzeugaufbau, d.h. in der Druckstufe, jeweils dann geöffnet, sobald in der volumenveränderlichen Kammer relativ zur Kammer mit konstantem Volumen ein Überdruck auftritt. Beim nachfolgenden Abwärtshub des Rades, d.h. in der Zugstufe, ist die genannte Verbindung geschlossen. Auf diese Weise kann die Kammer mit konstantem Volumen mit Druck aufgepumpt werden, bis die jeweils in der Druckstufe der Radbewegungen auftretenden Druckspitzen in der volumenveränderlichen Kammer den Druck in der Kammer mit konstantem Volumen nicht mehr überschreiten.

Ein besonderer Vorzug der Erfindung liegt darin, daß die Umschaltung der Ventilanordnung auf die schwingungsmäßige Abkopplung der gefederten Masse, im Falle eines Kraftfahrzeuges des Fahrzeugaufbaus, gegenüber relativ hochfrequenten Schwingungsanregungen, wie sie im Falle eines Kraftfahrzeuges beispielsweise auf rauhen Fahrbahnoberflächen auftreten, weitestgehend unverändert bleibt. Die Veränderung der Federrate durch Umschaltung der Ventilanordnung wirkt sich vornehmlich auf niederfrequente Schwingungen aus, d.h. im Falle eines Kraftfahrzeuges auf die vergleichsweise langsamen Aufbauschwingungen.

Bezüglich weiterer Vorteile und bevorzugter Merkmale wird auf die nachfolgende Erläuterung bevorzugter Ausführungsformen der Erfindung anhand der Zeichnung verwiesen.

Dabei zeigt
- Fig. 1: eine erste Ausführungsform des erfindungsgemäßen Abstützsystems und
- Fig. 2: eine abgewandelte Ausführungsform, jeweils in schematisierter Darstellung.

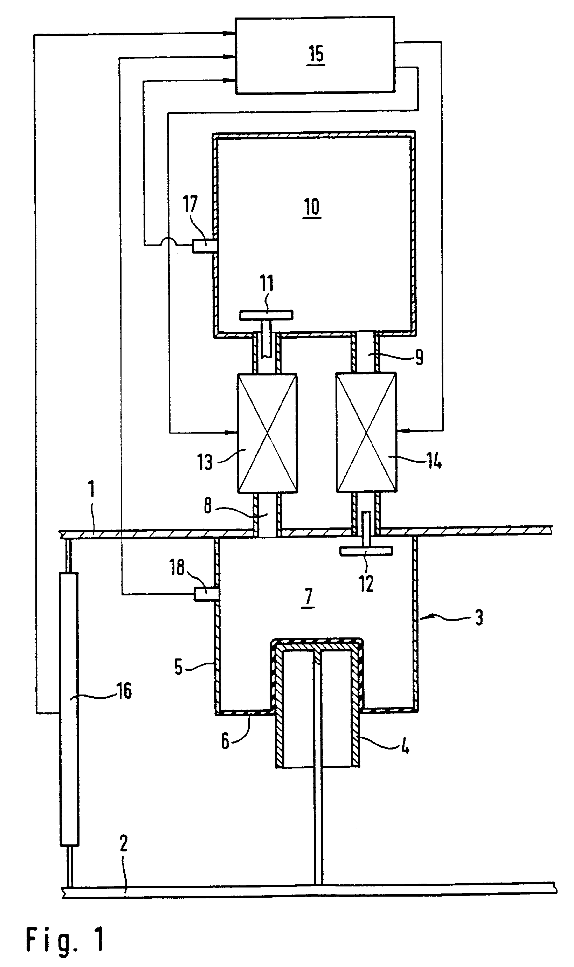

Gemäß Fig. 1 ist ein Fahrzeugaufbau 1, von dem lediglich die Unterseite ausschnittsweise schematisiert dargestellt ist, auf den Fahrzeugachsen 2, von denen lediglich eine einzige ausschnittsweise schematisiert wiedergegeben ist, mittels Luftfederaggregaten 3 in grundsätzlich bekannter Weise abgestützt.

Die Luftfederaggregate 3 sind nach Art von Verdrängeraggregaten ausgebildet und besitzen einen achsseitig angeordneten Verdrängerkolben 4, welcher je nach Federhub mehr oder weniger weit in ein aufbauseitig angeordnetes Gehäuse 5 eintaucht, welches durch einen auf den Verdrängerkolben 4 abrollenden Balg 6 kolbenseitig dicht abgeschlossen ist.

Entsprechend der Hubstellung des Kolbens 4 bzw. entsprechend dem Abstand zwischen Fahrzeugaufbau und jeweiliger Achse 2 hat die innerhalb des Gehäuses 5 gebildete Kammer 7 ein mehr oder weniger großes Volumen.

Die Kammer 7 ist über zwei Leitungen 8 und 9 mit einer weiteren Kammer 10 verbunden, deren Volumen unveränderlich ist. Die Leitungen 8 und 9 werden durch Rückschlagventile 11 und 12 gesteuert, welche jeweils in Reihe mit Proportionalventilen 13 bzw. 14 angeordnet sind, welche sich zwischen vollständiger Öffnung und vollständiger Schließung stufenlos steuern lassen und dementsprechend in der vom zugeordneten Rückschlagventil 11 bzw. 12 zugelassenen Strömungsrichtung eine mehr oder weniger stark gedrosselte Verbindung zwischen den beiden Kammern 7 und 10 zulassen.

Die Rückschlagventile 11 und 12 sind zueinander entgegengesetzt angeordnet, d.h. das Rückschlagventil 11 vermag (bei geöffnetem Proportionalventil 13) nur zu öffnen, wenn in der Kammer 7 ein hinreichender Überdruck relativ zur Kammer 10 vorhanden ist. Das Rückschlagventil 12 öffnet (bei geöffnetem Proportionalventil 14) nur dann, wenn in der Kammer 10 ein ausreichender Überdruck gegenüber der Kammer 7 vorliegt.

Gegebenenfalls können die Rückschlagventile 11 und 12 ungleich bemessen sein, so daß beispielsweise das Rückschlagventil 11 bereits bei vergleichsweise geringen Druckunterschieden zwischen den Kammern 7 und 10 öffnet, während für eine Öffnung des Rückschlagventiles 12 ein größerer Druckunterschied zwischen den Kammern 7 und 10 vorhanden sein muß.

Die Steuerung der Proportionalventile 13 und 14 erfolgt mit einer rechnergestützten Steuerschaltung 15, deren Ausgänge die Stellorgane der Proportionalventile 13 und 14 treiben.

Die Eingänge der Steuerschaltung 15 sind mit Hubgebern 16 verbunden, die zwischen dem Fahrzeugaufbau 1 und den Achsen 2 bei den Rädern angeordnet sind und deren Signale den jeweiligen Abstand zwischen Achse 2 bzw. dem jeweils benachbarten Rad und dem Fahrzeugaufbau 1 wiedergeben. Dabei kann der der Steuerschaltung 15 zugeordnete Rechner aus den Signalen der Hubgeber 16 neben der jeweiligen Hubstellung auch die Hubgeschwindigkeit bzw. die Hubrichtung ermitteln. Des weiteren kann der Rechner aus den genannten Signalen die Frequenz von Schwingungen des Fahrzeugaufbaus 1 berechnen.

Zusätzlich können weitere Eingänge der Steuerschaltung 15 mit Druckgebern 17 und 18 zur Ermittelung des Druckes in den Kammern 7 bzw. 10 verbunden sein.

Die in Fig. 1 dargestellte Anordnung funktioniert wie folgt:

Wenn beispielsweise der Fahrzeugaufbau 1 unerwünschte Bewegungen ausführt, insbesondere im Bereich der Aufbauresonanzfrequenz, so wird das Proportionalventil 13 in der Druckstufe des Federaggregates 3, d.h. bei einer Aufwärtsbewegung des Verdrängerkolbens 4 relativ zum Fahrzeugaufbau 1, geschlossen. Dies hat zur Folge, daß sich mit zunehmender Aufwärtsbewegung des Kolbens 4 relativ zum Fahrzeugaufbau in der Kammer 7 ein stark ansteigender Druck einstellt, denn die Kammer 7 ist in der Druckstufe gegenüber der Kammer 10 abgeschlossen, weil das Proportionalventil 13 geschlossen wurde und die Leitung 9 auch bei gegebenenfalls geöffnetem Proportionalventil 14 durch das Rückschlagventil 12 gesperrt wird. Sobald nun die Aufwärtsbewegung des Rades bzw. des Kolbens 4 relativ zum Fahrzeugaufbau 1 ihren Umkehrpunkt erreicht, wird das Proportionalventil 13 geöffnet, so daß eine gewisse Druckentlastung der Kammer 7 in die Kammer 10 auftritt, d.h. die in der vorangegangenen Druckstufe des Federaggregates 3 aufgrund der Absperrung der Kammer 7 gegenüber der Kammer 9 in der Kammer 7 erfolgte starke Druckerhöhung wird deutlich vermindert. Dies führt zu deutlich verminderten Rückstellkräften des Federaggregates.

Falls dies noch nicht ausreicht, die unerwünschten Bewegungen des Fahrzeugaufbaus 1 auszuregeln, kann das Proportionalventil 14 während der Zugstufe der Federbewegung geschlossen gehalten und bei Erreichen des Umkehrpunktes zwischen Zugstufe und Druckstufe geöffnet werden. Da die Leitung 8 auch bei gegebenenfalls offengebliebenem Proportionalventil 13 durch das Rückschlagventil 11 spätestens dann abgeschlossen wird, sobald zwischen den Kammern 7 und 10 Druckgleichheit bzw. ein geringfügiger Unterdruck in der Kammer 7 relativ zur Kammer 10 erreicht sind, wird sich im weiteren Verlauf der Zugstufe in der nunmehr gegenüber der Kammer 10 abgeschlossenen Kammer 7 ein deutlicher Unterdruck einstellen, d.h. die Abstützkräfte des Federaggregates 3 nehmen in der Zugstufe stark ab. Aufgrund des sich am Umkehrpunkt zwischen Zugstufe und Druckstufe öffnenden Proportionalventiles 14 strömt dann zu Beginn der Druckstufe Pneumatikmedium aus der Kammer 10 in die Kammer 7, so daß die Abstützkraft des Federaggregates 3 beim Durchlauf des Umkehrpunktes zwischen Zug- und Druckstufe deutlich erhöht wird.

Insgesamt lassen sich auf diese Weise die Abstützkräfte des Federaggregates derart gegenphasig zu den Aufbaubewegungen verändern, daß Aufbaubewegungen besonders wirksam entgegengewirkt wird.

Zur Ausregelung von Aufbaubewegungen wird also bei größeren Hubbewegungen beim Übergang von der Zug- zur Druckstufe ein deutlicher Druckanstieg in der volumenveränderlichen Kammer 7 und beim Übergang von der Druck- zur Zugstufe ein deutlicher Druckabfall in der Kammer 7 auftreten, so daß die Abstützkräfte jeweils gegenphasig zu den Aufbaubewegungen verändert werden.

Gegebenenfalls kann auch eine Änderung des Bodenabstandes des Fahrzeugaufbaus erreicht werden. Dazu können die relativ hochfrequenten Federbewegungen der Räder ausgenutzt werden, wie sie praktisch ständig während der Fahrt auftreten, und zwar auch dann, wenn der Fahrzeugaufbau 1 relativ zur Fahrbahn keine bzw. keine unerwünschten Hubbewegungen ausführt.

Um eine Vergrößerung des Bodenabstandes zu erzielen, wird in der Zugstufe des Federaggregates 3 das Proportionalventil 14 geöffnet, so daß Pneumatikmedium aus der Kammer 10 in die Kammer 7 strömt, sobald sich aufgrund der Volumensvergrößerung der Kammer 7 in der Zugstufe ein entsprechendes Druckgefälle von der Kammer 10 zur Kammer 7 einstellt. In der nachfolgenden Druckstufe wird ein Zurückströmen des Pneumatikmediums in die Kammer 10 einerseits durch das sich nunmehr schließende Rückschlagventil 12 und andererseits dadurch verhindert, daß das Proportionalventil 13 geschlossen gehalten wird. Auf diese Weise kann Pneumatikmedium aus der Kammer 10 in die Kammer 7 gepumpt werden, bis die in der Zugstufe des Federaggregates 3 auftretenden Druckabsenkungen in der Kammer 7 nicht mehr ausreichen, ein Druckgefälle von der Kammer 10 zur Kammer 7 herzustellen.

Um eine Niveauabsenkung des Fahrzeugaufbaus 1 zu erreichen, wird das Proportionalventil 13 geöffnet, während das Proportionalventil 14 (zumindest während der Zugstufe des Federaggregates 3) geschlossen bleibt. Auf diese Weise wird während der Druckstufe des Federaggregates 3 Pneumatikmedium aus der Kammer 7 in die Kammer 10 gepumpt, sobald sich aufgrund der Volumensverkleinerung der Kammer 7 in derselben ein hinreichender Überdruck relativ zur Kammer 10 aufbaut. Ein Zurückströmen des Pneumatikmediums in der nachfolgenden Zugstufe wird dann durch das sich schließende Rückschlagventil 11 sowie das geschlossene Proportionalventil 14 verhindert.

Die oben beschriebenen Steuerungsvorgänge sind jeweils dadurch charakterisiert, daß am Umkehrpunkt der Bewegung des Kolbens 4 relativ zum Fahrzeugaufbau 1 eine Umschaltung der Verbindung zwischen den Kammern 7 und 10 erfolgt, derart, daß eine zuvor freigegebene Verbindung abgesperrt bzw. eine zuvor geöffnete Verbindung abgeschlossen werden.

Ein besonderer Vorzug der Erfindung liegt dabei darin, daß die Proportionalventile 13 und 14 praktisch leistungsfrei gesteuert werden können, denn der Leistungsbedarf der Stellorgane dieser Ventile 13 und 14 ist äußerst gering.

Die Druckgeber 17 und 18 an den Kammern 7 und 10 dienen in erster Linie dazu, die Drosselwirkung der Ventile 13 und 14 bei deren Öffnung optimal in Abhängigkeit von der jeweiligen Druckdifferenz zwischen den Kammern 7 und 10 einzustellen. Darüber hinaus läßt sich mit diesen Druckgebern 17 und 18 auch überprüfen, ob die Rückschlagventile 11 und 12 korrekt arbeiten, wenn die jeweils dazu in Reihe liegenden Proportionalventile 13 bzw. 14 geöffnet sind.

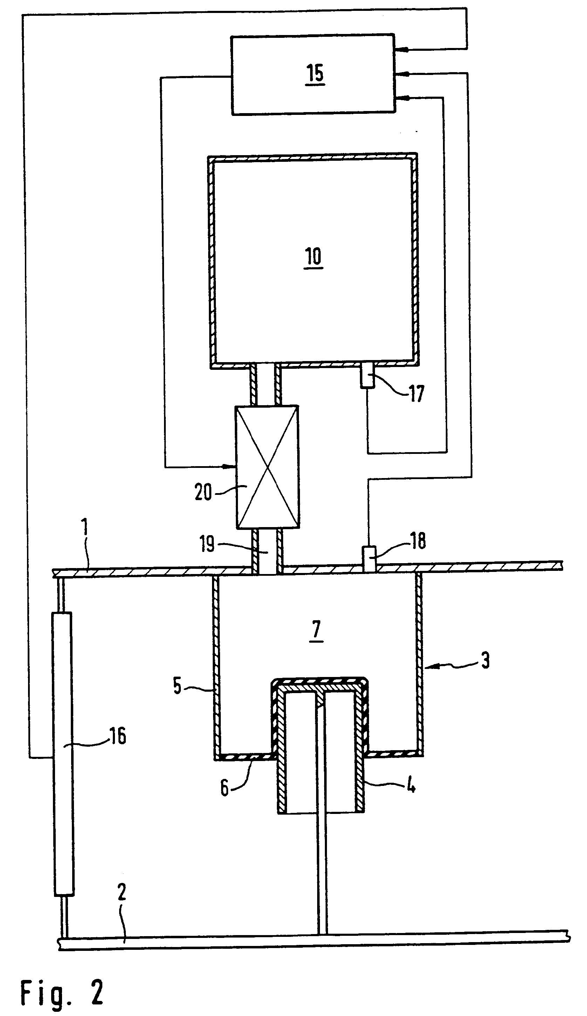

Die in Fig. 2 dargestellte Ausführungsform unterscheidet sich von der Konstruktion nach Fig. 1 im wesentlichen dadurch, daß zwischen den Kammern 7 und 10 lediglich eine einzige Leitung 19 angeordnet ist, welche durch ein regelbares Proportionalventil 20 gesteuert wird, das die Kammern 7 und 10 voneinander vollständig abzutrennen bzw. mehr oder weniger stark gedrosselt oder nahezu drosselfrei miteinander zu verbinden gestattet.

Grundsätzlich kann mit der Anordnung der Fig. 2 die gleiche Wirkungsweise wie bei der Anordnung der Fig. 1 erreicht werden, wenn das Proportionalventil 20 entsprechend in Abhängigkeit von den Druckdifferenzen zwischen den Kammern 7 und 10 gesteuert wird. Wenn also bei den oben beschriebenen Betriebsweisen der in Fig. 1 dargestellten Ausführungsform zwischen den Kammern 7 und 10 Pneumatikmedium ausgetauscht wird, muß das Proportionalventil 20 der in Fig. 2 dargestellten Ausführungsform jeweils geöffnet werden. Sobald bei der Ausführungsform nach Fig. 1 durch eines der Rückschlagventile 11 und 12 bzw. durch Schließen des jeweils zugeordneten Proportionalventiles 13 oder 14 ein Austausch von Pneumatikmedium zwischen den Kammern 7 und 8 verhindert wird, muß bei der Ausführungsform nach Fig. 2 das Proportionalventil 20 geschlossen werden.

Bei der Ausführungsform nach Fig. 1 können vergleichsweise langsam steuerbare Proportionalventile 13 und 14 eingesetzt werden, weil die Rückschlagventile 11 und 12 üblicherweise sehr trägheitsram arbeiten.

Bei der Ausführungsform nach Fig. 2 sollte das Proportionalventil 20 schnell umgesteuert werden können.

Abweichend von den dargestellten Ausführungsformen können gegebenenfalls auch hydropneumatische Federaggregate angeordnet sein. Diese unterscheiden sich von dem in den Fig. 1 und 2 dargestellten rein pneumatischen Federaggregaten 3 im wesentlichen nur dadurch, daß der Verdrängerkolben 4 als Teil eines hydraulischen Verdrängeraggregates angeordnet ist, welches seinerseits hydraulisch mit dem Balg 6 gekoppelt ist, so daß das Volumen der Kammer 7 wiederum entsprechend den Hubbewegungen des Verdrängerkolbens 4 vergrößert bzw. verkleinert wird. Im Prinzip ändert sich an der Wirkungsweise dabei nichts. Jedoch können die vom Verdrängerkolben 4 bei seinen Hüben bewirkten hydraulischen Ströme über mehr oder weniger stark wirksame Drosselstrecken geführt werden, um auf diese Weise eine zusätzliche hydraulische Dämpfung der Kolbenhübe zu erreichen.

Im übrigen ist es möglich, zwischen den Kammern 7 und 10 aktive Pumpaggregate anzuordnen, um gegebenenfalls die Möglichkeit zu erhalten, ein Druckgefälle zwischen den Kammern 7 und 10 zu erhöhen bzw. bei geringen Druckdifferenzen zwischen den Kammern 7 und 10 besonders schnell zu vermindern und/oder umzukehren.

Zum Antrieb der Pumpen wird zwar Leistung benötigt. Jedoch bleibt der Leistungsbedarf relativ gering, weil sich die Druckdifferenz zwischen den Kammern 7 und 10 bereits durch Verschiebung von relativ wenig Pneumatikmedium zwischen den Kammern 7 und 10 deutlich verändern läßt.

## Patentansprüche

1. Federndes Abstützsystem, insbesondere für Kraftfahrzeuge, mit zwischen einer gefederten Masse (1) und einer ungefederten Masse (2) angeordneten pneumatischen bzw. hydropneumatischen Federelementen, welche nach Art von Verdrängeraggregaten aufgebaut sind und eine erste Pneumatikkammer (7), deren Volumen sich entsprechend dem jeweiligen Federhub ändert, sowie eine zweite Pneumatikkammer (10) besitzen, welche ein konstantes Volumen aufweist und mittels einer in Abhängigkeit von der Hubstellung des jeweiligen Federelementes steuerbaren Ventilanordnung (13,14; 20) mit der ersten Kammer (7) verbindbar bzw. von der ersten Kammer (7) abtrennbar ist,
**dadurch gekennzeichnet,**
daß die Ventilanordnung (11 bis 14; 20) mittels einer rechnergestützten Steuerung (15), die aus den Signalen eines zwischen gefederter und ungefederter Masse angeordneten Hubgebers (16) neben der jeweiligen Hubstellung auch die Hubgeschwindigkeit bzw. -richtung ermittelt, jeweils bei Hubrichtungsumkehr zwischen Offen- und Schließlage umstellbar ist.

2. Abstützsystem nach Anspruch 1,
**dadurch gekennzeichnet,**
daß im geschlossenen Zustand der Ventilanordnung (11 bis 14;20) eine gedrosselte Verbindung zwischen den Kammern (7,10) bestehen bleibt, wobei die Drosselwiderstände für Zug- und Druckstufe des Federelementes (3) unterschiedlich bemessen sein können.

3. Abstützsystem nach einem der Ansprüche 1 oder 2,
**dadurch gekennzeichnet,**
daß die Ventilanordnung (11 bis 14;20) zum Ausregeln unerwünschter Bewegungen der gefederten Masse bzw. des Fahrzeugaufbaus (1) in der Druckstufe geschlossen bzw. so geschaltet wird, daß nur eine Strömung von der Kammer (10) mit konstantem Volumen zur volumenveränderlichen Kammer (7) zugelassen ist,und daß die Ventilanordnung (11 bis 14;20) am Umkehrpunkt zwischen Druck- und Zugstufe geöffnet bzw. in einen Zustand geschaltet wird, in den eine Strömung von der volumenveränderlichen Kammer (7) in Richtung der Kammer (10) mit konstantem Volumen möglich ist.

4. Abstützsystem nach einem der Ansprüche 1 bis 3,
**dadurch gekennzeichnet,**
daß zum Ausregeln unerwünschter Bewegungen der gefederten Masse bzw. des Fahrzeugaufbaus (1) die Ventilanordnung (11 bis 14;20) in der Zugstufe geschlossen bzw. so geschaltet wird, daß nur eine Strömung von der volumenveränderlichen Kammer (7) in Richtung der Kammer (10) mit konstantem Volumen zugelassen ist und daß die Ventilanordnung (11 bis 14;20) am Umkehrpunkt zwischen Zug- und Druckstufe geöffnet bzw. in einen Zustand geschaltet wird, in dem eine Strömung von der Kammer (10) mit konstantem Volumen in Richtung der volumenveränderlichen Kammer (7) möglich ist.

5. Abstützsystem nach einem der Ansprüche 1 bis 4,
**dadurch gekennzeichnet,**
daß zur Erhöhung des mittleren Volumens der volumenveränderlichen Kammer (7) bzw. zur Erhöhung des mittleren Bodenabstandes des Fahrzeugaufbaus (1) die Ventilanordnung (11 bis 14;20) in der Zugstufe bei Überdruck innerhalb der Kammer (10) mit konstantem Volumen relativ zur volumenveränderlichen Kammer (7) geöffnet und beim Umkehrpunkt zwischen Zug- und Druckstufe geschlossen wird.

6. Abstützsystem nach einem der Ansprüche 1 bis 4,
**dadurch gekennzeichnet,**
daß zur Verminderung des mittleren Volumens der volumenveränderlichen Kammer (7) bzw. zur Verminderung des mittleren Bodenabstandes des Fahrzeugaufbaus (1) die Ventilanordnung (11 bis 14;20) in der Druckstufe bei Überdruck in der volumenveränderlichen Kammer (7) relativ zur Kammer (10) mit konstantem Volumen geöffnet und am Umkehrpunkt zwischen Druck- und Zugstufe geschlossen wird.

7. Abstützsystem nach einem der Ansprüche 1 bis 6,
**dadurch gekennzeichnet,**
daß die Ventilanordnung zwei in entgegengesetzten Richtungen öffnende Rückschlagventile (11,12) sowie dazu jeweils in Reihe liegende Proportionalventile (13,14) umfaßt, die zwischen einem geschlossenen und einem geöffneten Zustand umsteuerbar sind.

8. Abstützsystem nach einem der Ansprüche 1 bis 7,
**dadurch gekennzeichnet,**
daß die Ventilanordnung durch ein steuerbares Proportionalventil (20) gebildet wird, welches sich zwischen einer relativ ungedrosselten Offenstellung und einer völligen bzw. stark gedrosselten Schließstellung umsteuern läßt.

9. Abstützsystem nach einem der Ansprüche 1 bis 8,
**dadurch gekennzeichnet,**
daß zwischen der volumenveränderlichen Kammer (7) und der Kammer (10) mit konstantem Volumen jeweils eine Pumpe zur Verlagerung von Pneumatikmedium zwischen diesen beiden Kammern (7,10) angeordnet ist.

## Claims

1. Sprung support system, especially for motor vehicles, with pneumatic or hydropneumatic spring elements which are arranged between a sprung mass (1) and a non-sprung mass (2) and which are constructed in the form of displacement units and possess a first pneumatic chamber (7), the volume of which changes according to the respective spring stroke, and a second pneumatic chamber (10) which has a constant volume and which can be connected to and isolated from the first chamber (7) by means of a valve arrangement (13, 14; 20) controllable as a function of the stroke position of the respective spring element, characterised in that the valve arrangement (11 to 14; 20) can be changed over between an open position and a closed position at every reversal of stroke direction by means of a computer-assisted control (15) which determines from the signals of a stroke transmitter (16) arranged between the sprung mass and non-sprung mass not only the respective stroke position, but also the stroke speed and stroke direction.

2. Support system according to Claim 1, characterised in that, in the closed state of the valve arrangement (11 to 14; 20), a throttled connection remains between the chambers (7, 10), and the throttle resistances can be calculated differently for the extension stage and the compression stage of the spring element (3).

3. Support system according to one of Claims 1 or 2, characterized in that, to eliminate undesirable movements of the sprung mass or of the vehicle body (1), the valve arrangement (11 to 14; 20) is closed or so switched in the compression stage that only a flow from the constant-volume chamber (10) to the variable-volume chamber (7) is permitted, and in that, at the reversal point between the compression stage and extension stage, the valve arrangement (11 to 14; 20) is opened or is switched into a state in which a flow from the variable-volume chamber (7) in the direction of the constant-volume chamber (10) is possible.

4. Support system according to one of Claims 1 to 3, characterised in that, to eliminate undesirable movements of the sprung mass or of the vehicle body (1), the valve arrangement (11 to 14; 20) is closed or so switched in the extension stage that only a flow from the variable-volume chamber (7) in the direction of the constant-volume chamber (10) is permitted, and in that, at the reversal point between the extension stage and compression stage, the valve arrangement (11 to 14; 20) is opened or is switched into a state in which a flow from the constant-volume chamber (10) in the direction of the variable-volume chamber (7) is possible.

5. Support system according to one of Claims 1 to 4, characterised in that, to increase the average volume of the variable-volume chamber (7) or to increase the average ground clearance of the vehicle body (1), in the extension stage the valve arrangement (11 to 14; 20) is opened when there is overpressure within the constant-volume chamber (10) in relation to the variable-volume chamber (7) and is closed at the reversal point between the extension stage and compression stage.

6. Support system according to one of Claims 1 to 4, characterised in that, to reduce the average volume of the variable-volume chamber (7) or to reduce the average ground clearance of the vehicle body (1), in the compression stage the valve arrangement (11 to 14; 20) is opened when there is overpressure in the variable-volume chamber (7) in relation to the constant-volume chamber (10) and is closed at the reversal point between the compression stage and extension stage.

7. Support system according to one of Claims 1 to 6, characterised in that the valve arrangement comprises two non-return valves (11, 12) opening in opposite directions and respective proportional valves (13, 14) which are arranged in series with these and which can be changed over between a closed state and an opened state.

8. Support system according to one of Claims 1 to 7, characterised in that the valve arrangement is formed by a controllable proportional valve (20) which can be changed over between a relatively unthrottled open position and a complete or sharply throttled closing position.

9. Support system according to one of Claims 1 to 8, characterised in that between the variable-volume chamber (7) and the constant volume chamber (10) is arranged a respective pump for displacing pneumatic medium between these two chambers (7, 10).

## Revendications

1. Système de support à ressorts, en particulier pour véhicules automobiles, avec des éléments élastiques, pneumatiques, respectivement hydropneumatiques, disposés entre une masse suspendue et une masse non suspendue et construits à la façon de groupes à plongeur et comportant une première chambre pneumatique (7), dont le volume varie en fonction du débattement élastique spécifique, ainsi qu'une deuxième chambre pneumatique (10), présentant un volume constant et susceptible d'être reliée à la première chambre (7), respectivement isolée de la première chambre (7) au moyen d'un agencement de soupape (13, 14; 20) susceptible d'être commandé en fonction de la position de débattement de l'élément élastique spécifique, caractérisé en ce que l'agencement de soupape (11 à 14; 20) est susceptible d'être commuté, chaque fois lors de l'inversion du sens de débattement, entre une position d'ouverture et une position de fermeture, au moyen d'une commande (15) assistée par ordinateur, qui détermine à partir des signaux d'un capteur de débattements (16) disposé entre une masse suspendue et une masse non suspendue, outre la position de débattement spécifiquement, également la vitesse de débattement, respectivement le sens de débattement.

2. Système de support selon la revendication 1, caractérisé en ce qu'à l'état fermé de l'agencement de soupape (11 à 14; 20), il subsiste une liaison étranglée entre les chambres (7, 10), la résistance d'étranglement pouvant être de valeur différente, pour la phase de traction et la phase de compression de l'élément élastique (3).

3. Système de support selon l'une des revendications 1 ou 2, caractérisé en ce que, pour éliminer par régulation tout déplacement indésirable de la masse suspendue, respectivement de la carrosserie de véhicule (1), l'agencement de soupape (11 à 14; 20), lorsqu'il est dans la phase de compression, est fermé, respectivement commuté de telle façon que seul est admis un écoulement allant de la chambre (10) à volume constant vers la chambre (7) à volume variable et en ce qu'au point d'inversion entre la phase de compression et la phase de traction, l'agencement de soupape (11 à 14; 20) est ouvert, respectivement commuté en un état dans lequel est possible un écoulement allant de la chambre à volume variable (7) en direction de la chambre (10) à volume constant.

4. Système de support selon l'une des revendications 1 à 3, caractérisé en ce que, pour éliminer par régulation tout déplacement indésirable de la masse suspendue, respectivement de la carrosserie de véhicule (1), l'agencement de soupape (11 à 14; 20), dans la phase de traction, est fermé, respectivement commuté de telle façon que seul soit admis un écoulement allant de la chambre à volume variable (7) en direction de la chambre (10) à volume constant, et qu'au point d'inversion entre la phase de compression et la phase de traction, l'agencement de soupape (11 à 14; 20) est ouvert, respectivement commuté en un état dans lequel est possible un écoulement allant de la chambre (10) à volume constant en direction de la chambre (7) à volume variable .

5. Système de support selon l'une des revendications 1 à 4, caractérisé en ce que, pour augmenter le volume moyen de la chambre (7) à volume variable, respectivement pour augmenter la garde au sol moyenne de la carrosserie de véhicule (1), dans la phase de traction, en cas de surpression à l'intérieur de la chambre (10) à volume constant par rapport à la chambre (7) à volume variable, l'agencement de soupape (11 à 14; 20) est ouvert et est fermé au point d'inversion entre la phase de traction et la phase de compression.

6. Système de support selon l'une des revendications 1 à 4, caractérisé en ce que pour diminuer le volume moyen de la chambre (7) à volume variable, respectivement pour diminuer la garde au sol moyenne de la carrosserie de véhicule (1), dans la phase de compression, en cas de surpression dans la chambre (7) à volume variable par rapport à la chambre (10) à volume constant, l'agencement de soupape (11 à 14; 20) est ouvert et est fermé au point d'inversion entre la phase de compression et la phase de traction.

7. Système de support selon l'une des revendications 1 à 6, caractérisé en ce que l'agencement de soupape comprend deux clapets anti-retour (11, 12) s'ouvrant dans des sens opposés ainsi que des soupapes proportionnelles (13, 14) chaque fois mises en circuit en série avec les clapets anti-retour, susceptibles d'être commandées pour opérer une commutation entre un état fermé et un état ouvert.

8. Système de support selon l'une des revendications 1 à 7, caractérisé en ce que l'agencement de soupape est formé par une soupape proportionnelle (20) susceptible d'être commandée, pouvant être commutée entre une position d'ouverture relativement exempte d'étranglement et une position de fermeture entièrement étranglée, respectivement fortement étranglée.

9. Système de support selon l'une des revendications 1 à 8, caractérisé en ce qu'entre la chambre (7) à volume variable et la chambre (10) à volume constant est chaque fois disposée une pompe destinée à déplacer un fluide pneumatique entre ces deux chambres (7, 10).
